# DEMANDE DE BREVET EUROPEEN

(11) **EP 1 424 226 A2**
(43) Date de publication de la demande: **02.06.2004**
(21) Numéro de dépôt: 03292731.1
(22) Date de dépôt: 31.10.2003
(51) Int. Cl.: B60G 15/06, G01L 1/00

(54) **Butée de suspension de véhicule composée d'un roulement avec un capteur de rotation pour mesurer les efforts verticaux**

(30) Priorité: 27.11.2002 FR 0214899
(71) Demandeur: S.N.R. ROULEMENTS, 74010 Annecy Cédex (FR)
(72) Inventeur: Blanchin, Olivier, 74000 Annecy (FR); Nicot, Christophe, 74600 Quintal (FR)
(74) Mandataire: Geismar, Thierry

(57) **Abrégé**

L'invention concerne une butée de suspension pour roue de véhicule automobile du type comprenant un organe fixe destiné à être solidaire du châssis (2) du véhicule et un organe tournant destiné à être solidaire du ressort (4) de suspension de sorte à être déplacée en rotation sous l'effet des efforts exercés par ledit ressort, ladite butée comprenant un dispositif de mesure des efforts verticaux appliqués à la roue du véhicule, ledit dispositif comprenant un codeur (11) générateur d'impulsions qui est solidaire de l'un des organes, un capteur (12) solidaire de l'autre organe qui est apte à détecter ces impulsions de sorte à déterminer la position angulaire de l'organe tournant par rapport à l'organe fixe, et un moyen de calcul apte, à partir de cette position, à calculer l'effort vertical appliqué correspondant.

L'invention concerne également un procédé de mesure des efforts verticaux appliqués sur une roue associée au châssis (2) d'un véhicule par l'intermédiaire d'une telle butée.

## Description

L'invention concerne une butée de suspension pour roue de véhicule automobile ainsi qu'un procédé de mesure des efforts verticaux appliqués sur une roue associée au châssis d'un véhicule par l'intermédiaire d'une telle butée.

Les butées connues comprennent classiquement un organe fixe destiné à être solidaire du châssis du véhicule et un organe tournant destiné à être solidaire en rotation du ressort de suspension.

En particulier, les butées peuvent comprendre un roulement pourvu d'une bague supérieure fixe, d'une bague inférieure tournante et de corps roulants disposés entre lesdites bagues.

Ainsi, les butées permettent d'assurer la solidarisation des roues au châssis du véhicule par l'intermédiaire des suspensions et des ressorts associés, et ce en laissant les roues libres de se déplacer angulairement et en supportant les efforts multiaxiaux dus aux conditions de roulage (accélération, freinage, état du revêtement, virage, ...).

En particulier, les efforts verticaux provoquent une variation de la compression du ressort et donc un enroulement de ses spires sur elles-mêmes, ce qui entraîne une rotation de l'organe tournant par rapport à l'organe fixe.

Par ailleurs, il est souhaitable de mesurer les efforts subis par les roues du véhicule, notamment pour les besoins d'un certain nombre de systèmes d'assistance électronique du véhicule, par exemple destinés à la sécurité active, au confort de conduite (notamment au pilotage des suspensions) ou à la réduction de la consommation de carburant.

Pour ce faire, il est connu de mesurer directement les forces exercées par la chaussée sur le véhicule, ces mesures étant réalisées soit au niveau du pneu soit au niveau des pièces du train de roue. Mais ces stratégies de mesures présentent un certain nombre de limitations.

En particulier, lorsque la mesure est réalisée sur le pneu qui est un élément tournant, il se pose des problèmes de transmission du signal dans un référentiel fixe de sorte à pouvoir en déduire le module des forces, et ce de façon d'autant plus critique que les signaux sont nombreux et doivent être analysés en temps réel pour pouvoir commander les systèmes d'assistance.

Concernant la mesure sur les pièces de train, le principal problème qui se pose est celui de l'analyse des signaux pour en déduire le module des forces respectivement dans les trois directions de l'espace. En effet, l'application d'un effort transversal au pied de la roue crée un moment de renversement au niveau du roulement qui est dû au bras de levier que représente le rayon de la roue. L'effet de l'effort transversal va donc être prépondérant sur l'effet de l'effort vertical ce qui rend difficile la détermination exacte de cet effort vertical.

Pour résoudre ces inconvénients, l'invention propose de mesurer, au niveau de la butée de suspension du véhicule, les efforts verticaux appliqués à la roue dudit véhicule, et ce de façon indirecte en mesurant en continu les déplacements angulaires de l'organe tournant qui sont induits par lesdits efforts verticaux.

A cet effet, et selon un premier aspect, l'invention propose une butée de suspension pour roue de véhicule automobile du type comprenant un organe fixe destiné à être solidaire du châssis du véhicule et un organe tournant destiné à être solidaire du ressort de suspension de sorte à être déplacée en rotation sous l'effet des efforts exercés par ledit ressort, ladite butée comprenant un dispositif de mesure des efforts verticaux appliqués à la roue du véhicule, ledit dispositif comprenant un codeur générateur d'impulsions qui est solidaire de l'un des organes, un capteur solidaire de l'autre organe qui est apte à détecter ces impulsions de sorte à déterminer la position angulaire de l'organe tournant par rapport à l'organe fixe, et un moyen de calcul apte, à partir de cette position, à calculer l'effort vertical appliqué correspondant.

Selon une réalisation, la butée comprend un roulement pourvu d'une bague supérieure fixe formant organe fixe, d'une bague inférieure tournante formant organe tournant et de corps roulants disposés entre lesdites bagues.

Selon un deuxième aspect, l'invention propose un procédé de mesure des efforts verticaux appliqués sur une roue associée au châssis d'un véhicule automobile par l'intermédiaire d'une telle butée, dans lequel, outre la position angulaire de la bague tournante, l'angle de braquage des roues et/ou la valeur de l'enfoncement de la suspension sont utilisés par le moyen de calcul.

D'autres objets et avantages de l'invention apparaîtront au cours de la description qui suit, faite en référence aux dessins annexés, dans lesquels :
- les figures 1 à 6 sont des vues partielles en coupe longitudinale d'une butée dans laquelle le codeur est associé à la bague inférieure respectivement suivant cinq modes de réalisation ;
- les figures 7 à 9 sont des vues partielles en coupe longitudinale d'une butée dans laquelle le codeur est associé à la coupelle inférieure respectivement suivant trois modes de réalisation ;
- la figure 8a est une vue agrandie d'une partie de la figure 8 montrant le codeur suivant une variante dans laquelle il comprend une extension formant moyen d'étanchéité dynamique ;
- la figure 10 est une vue partielle en coupe longitudinale d'une butée dans laquelle le codeur est réalisé dans une partie de la coupelle inférieure ;
- les figures 11 à 14 sont des vues partielles en coupe longitudinale d'une butée dans laquelle le capteur est disposé respectivement suivant quatre modes de réalisation.

En relation avec les figures, on décrit une butée de suspension pour roue de véhicule automobile qui comprend un roulement pourvu d'une bague supérieure 1 fixe qui est solidaire du châssis 2 du véhicule, d'une bague inférieure tournante 3 qui est solidaire en rotation du ressort 4 de suspension et de corps roulants 5 disposés entre lesdites bagues de sorte à permettre la rotation relative desdites bagues autour d'un axe. En particulier, une rotation de quelques degrés est induite par le déplacement angulaire des roues (angle de braquage) ainsi que par les efforts verticaux ou axiaux qui s'appliquent sur la roue.

Dans la suite de la description les termes « supérieur » et « inférieur » sont définis par rapport à des localisations respectivement supérieure et inférieure dans les butées de suspension telles que représentées sur les figures, les termes « intérieur » et « extérieur » sont définis par rapport à des localisations spectivement proche et éloignée de l'axe de rotation, les termes « vertical » ou « axial » et « transversal » ou « radial » sont définis par rapport à un plan respectivement parallèle et perpendiculaire à l'axe de rotation.

Dans les modes de réalisation représentés, la butée de suspension comprend une coupelle supérieure 6 associée à la bague supérieure 1, ladite coupelle étant associée au châssis 2, et une coupelle inférieure 7 associée à la bague inférieure 3.

La coupelle inférieure 7 est formée d'une pièce essentiellement annulaire qui comprend un logement 8 dans lequel la partie extrême du ressort 4 vient en appui en assurant une fixation relative en rotation du ressort 4 sur la coupelle inférieure 7. Ainsi, les efforts verticaux exercés par le ressort 4 sur la coupelle inférieure 7 sont transformés, du fait de l'enroulement des spires du ressort 4, en déplacement angulaire de la bague inférieure 3 par rapport à la bague supérieure 1. La coupelle inférieure 7 est par exemple obtenue par moulage d'un matériau thermoplastique de type polyamide 6.6.

La coupelle supérieure 6 est formée d'une pièce essentiellement annulaire qui dans les modes de réalisation représentés est formée en caoutchouc surmoulé sur un insert de renfort annulaire 6a, ladite coupelle comprenant un alésage 6b agencé pour recevoir l'extrémité de la tige de l'amortisseur de suspension.

L'insert 6a comprend une partie annulaire radiale et une jupe cylindrique s'étendant axialement vers le bas à partir du bord extérieur de la partie radiale. La jupe axiale comprend un repli radial annulaire 6a' pour l'appui d'une butée de choc 9 par l'intermédiaire d'un insert 10 monté sur ladite butée de choc.

La butée de choc 9 comprend une partie annulaire axiale et une jupe cylindrique s'étendant axialement vers le bas à partir du bord extérieur de la partie radiale.

Les bagues 1, 3 du roulement sont constituées chacune d'une rondelle de tôle emboutie qui sont respectivement associées, par exemple par emmanchement, aux deux coupelles 6, 7, lesdites bagues comprenant des chemins de roulement disposés en vis-à-vis de sorte à recevoir les corps roulants 5 qui, dans les modes de réalisation représentés, sont sphériques. En particulier, les géométries des coupelles 6, 7 et des bagues 1, 3 associées sont agencées pour permettre une fixation fiable des bagues 1, 3 sur les coupelles 6, 7, et ce notamment vis-à-vis des efforts radiaux.

Bien que la description de l'invention soit faite en relation avec une butée de suspension de type « troisième génération » dans laquelle le bloc filtrant est intégré à la coupelle supérieure 6, l'invention est directement transposable par l'homme du métier à des butées de suspension présentant une autre structure générale, c'est-à-dire dans lesquelles les différents organes fonctionnels de la butée sont agencés différemment. En outre, la description faite est également directement transposable à une butée de suspension du type sans roulement, par exemple du type à palier lisse ou comprenant une pièce élastomérique déformable en torsion, ladite butée comprenant toujours un organe fixe et un organe tournant sous l'effet des efforts exercés par le ressort 4. En effet, l'invention concerne l'intégration dans la butée de suspension d'un dispositif de mesure des efforts verticaux ou axiaux appliqués à la roue du véhicule.

Le dispositif de mesure décrit en relation avec les figures comprend un codeur 11 générateur d'impulsions qui est solidaire en rotation de la bague tournante 3, un capteur 12 fixe par rapport au codeur 11 qui est apte à détecter ces impulsions de sorte à déterminer la position angulaire de la bague tournante 3 et un moyen de calcul apte, à partir de cette position, à calculer l'effort vertical appliqué correspondant.

En variante, compte tenu de la faible amplitude de rotation de l'organe tournant sous l'effet des efforts exercés par le ressort 4, il est également envisageable que le capteur 12 soit solidaire de l'organe tournant et que le codeur 11 soit solidaire de l'organe fixe.

Dans un exemple particulier, le codeur 11 est formé d'un anneau magnétique multipolaire en matériau synthétique chargé de particules de ferrite sur lequel est aimantée une pluralité de paires de pôles Nord et Sud équirépartis avec une largeur angulaire constante.

Le capteur 12 associé peut comprendre au moins deux éléments sensibles qui sont par exemple choisis dans le groupe comprenant les sondes à effet Hall, les magnétorésistances, les magnétorésistances géantes.

Le capteur 12 utilisé est apte à délivrer deux signaux électriques S1, S2 périodiques en quadrature. Le principe d'obtention des signaux S1 et S2 à partir d'une pluralité d'éléments sensibles alignés est par exemple décrit dans le document FR-2 792 403 issu de la demanderesse.

Le capteur 12 comprend en outre un circuit électronique qui, à partir des signaux S1, S2, délivre des signaux digitaux A, B carrés en quadrature qui sont représentatif de la position angulaire du codeur 11, et donc de la bague tournante 3, par rapport au capteur fixe 12.

Suivant une réalisation, le capteur 12 comprend en outre un interpolateur, par exemple du type décrit dans le document FR-2 754 063 issu de la demanderesse, afin d'augmenter la résolution des signaux de sortie.

Le capteur 12 peut être intégré sur un substrat en silicium ou équivalent par exemple AsGa, de sorte à former un circuit intégré et personnalisé pour une application spécifique, circuit parfois désigné sous le terme ASIC pour faire référence au circuit intégré conçu partiellement ou complètement en fonction des besoins.

Suivant l'invention, il est donc possible de mesurer les efforts verticaux appliqués sur une roue associée au châssis 2 d'un véhicule automobile par l'intermédiaire de la butée.

En effet, il est possible de déterminer une loi de comportement du ressort 4 en fonction des efforts verticaux, par exemple issue de la théorie ou d'un étalonnage initial, et d'utiliser cette loi dans le moyen de calcul pour relier la rotation de l'organe tournant qui est mesurée à l'effort vertical qui est subi.

En outre, le moyen de calcul peut utiliser l'angle de braquage des roues, par exemple connu en utilisant un capteur d'angle de braquage du volant du véhicule, et/ou la valeur de l'enfoncement de la suspension, de sorte à décorréler les composantes de la rotation de l'organe tournant qui sont dues respectivement aux efforts axiaux et à l'angle de braquage, de sorte à obtenir les efforts verticaux indépendamment de cet angle de braquage.

Bien que la description soit faite en relation avec un ensemble codeur/capteur magnétique, il est également possible de mettre en oeuvre l'invention de façon analogue en utilisant une technologie équivalente, par exemple de type optique. Par exemple, le codeur 11 peut être formé d'une cible en métal ou en verre sur laquelle ont été gravés des motifs optiques analogues aux motifs magnétiques multipolaires exposés ci-dessus, les éléments sensibles étant alors formés de détecteurs optiques.

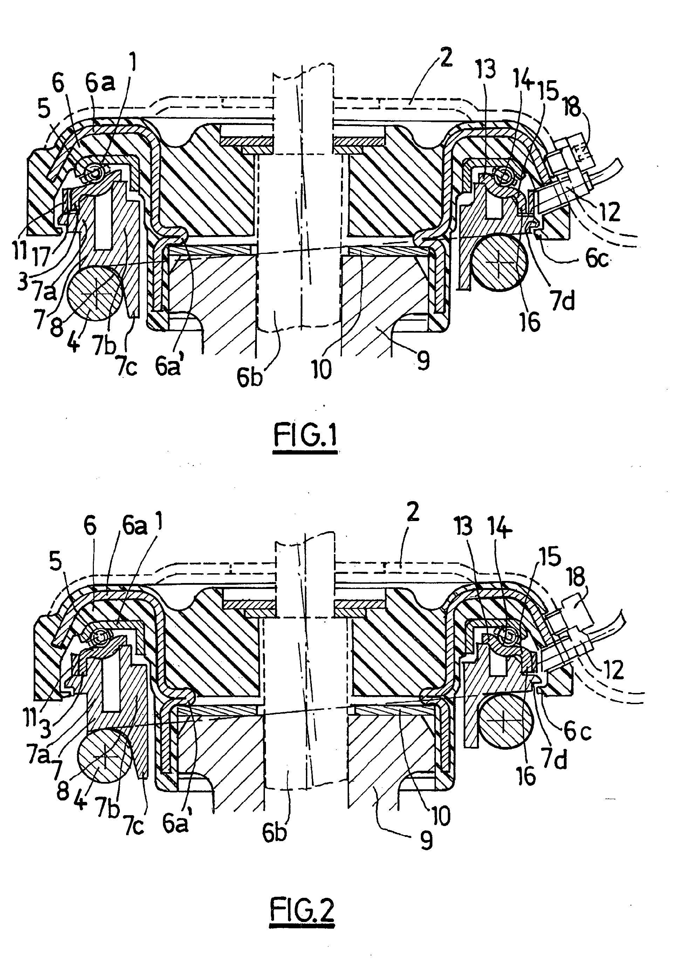

En relation avec les figures 1 à 6, on décrit cinq modes de réalisation de l'association du codeur 11 sur la bague inférieure 3.

Sur les figures 1 et 2, le codeur 11 est associé à la bague inférieure 3 de sorte à permettre une lecture radiale des impulsions issues du codeur 11, ladite bague comprenant, de l'intérieur vers l'extérieur et reliés entre eux, une couronne radiale 13, le chemin de roulement 14 et une couronne comprenant une partie radiale 15 et une partie axiale 16. La couronne intérieure 13 est décalée axialement vers le haut par rapport à la partie radiale 15. La coupelle inférieure 7 comprend du coté supérieur deux saillies cylindriques 7a, 7b destinées à se loger respectivement contre une couronne 13, 15 de sorte à assurer une solidarisation fiable de la bague inférieure 3 sur la coupelle 7. Par ailleurs, la coupelle inférieure 7 comprend, du coté inférieur, une saillie cylindrique 7c qui forme la paroi axiale du logement 8, la paroi radiale dudit logement étant formée par la face inférieure du corps de la coupelle inférieure 7.

Sur la figure 1 le codeur 11 est surmoulé sur une portée cylindrique annulaire d'une armature 17 qui est associée, par exemple par emmanchement, sur la face inférieure axiale de la partie axiale 16 de sorte que l'armature 17 vienne en appui sur la face extérieure radiale de la partie axiale 16.

Sur la figure 2, le codeur 11 est directement surmoulé ou collé sur la face extérieure radiale de la partie axiale 16.

Dans ces deux modes de réalisation, le capteur 12 est associé au châssis 2 au moyen d'une vis 18, ledit châssis et la coupelle supérieure 6 comprenant un logement destiné à recevoir ledit capteur de sorte à positionner les éléments sensibles en regard et à distance d'entrefer du codeur 11. En outre, la fiabilité de ce positionnement est améliorée par le fait que le codeur 11 est en appui sur la partie axiale 16, et que le capteur 12 comprend une extrémité biseautée permettant de disposer les éléments sensibles dans un plan sensiblement parallèle au plan du codeur 11, et ce sans interférer avec le codeur 11 lors de sa rotation.

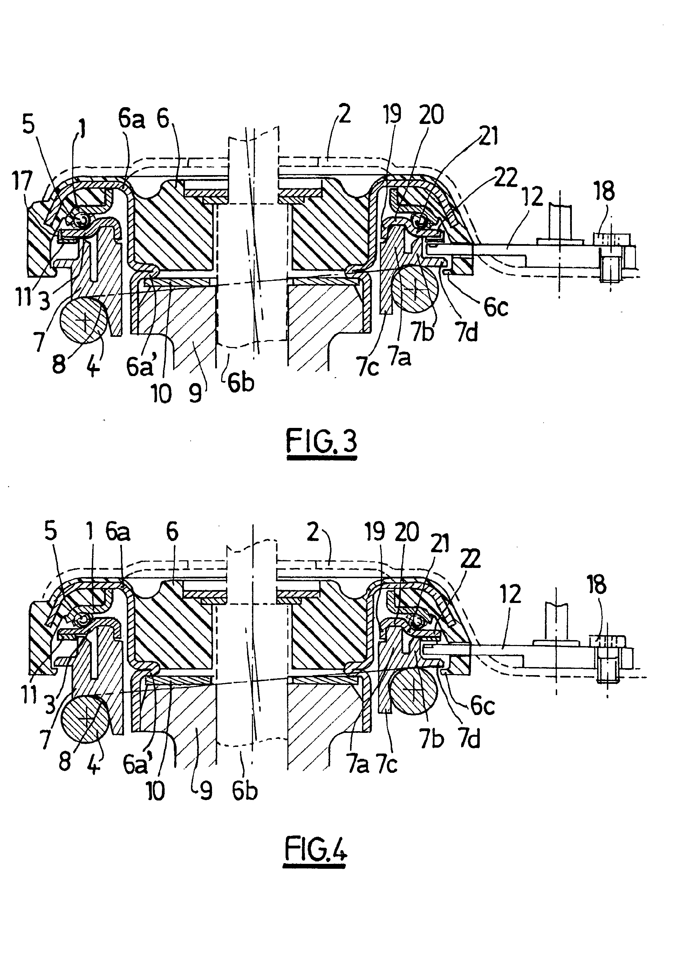

Sur les figures 3 et 4, le codeur 11 est associé à la bague inférieure 3 de sorte à permettre une lecture axiale, ladite bague comprenant, de l'intérieur vers l'extérieur et reliés entre eux, une couronne comprenant une partie axiale 19 et une partie radiale 20, le chemin de roulement 21 et une couronne radiale 22. La partie radiale 20 est décalée axialement vers le haut par rapport à la couronne extérieure 22. La coupelle inférieure 7 a une géométrie analogue à celle décrite en relation avec les figures 1 et 2.

Sur la figure 3 le codeur 11 est surmoulé sur une portée cylindrique annulaire d'une armature 17 qui est associée, par exemple par emmanchement, sur la face extérieure radiale de la couronne extérieure 22 de sorte que l'armature 17 vienne en appui sur la face inférieure axiale de la couronne extérieure 22.

Sur la figure 4, le codeur 11 est directement surmoulé ou collé sur la face inférieure axiale de la couronne extérieure 22.

Dans ces deux modes de réalisation, le capteur 12 est associé au châssis 2 au moyen d'une vis 18, ledit châssis et la coupelle supérieure 6 comprenant un logement destiné à recevoir ledit capteur de sorte à positionner les éléments sensibles en regard et à distance d'entrefer du codeur 11. En outre, la fiabilité de ce positionnement est améliorée par le fait que le codeur 11 est en appui sur la couronne extérieure 22. Par ailleurs, le capteur 12 possède une géométrie agencée pour permettre son association sur une zone du châssis 2 qui est prévue à distance de la butée.

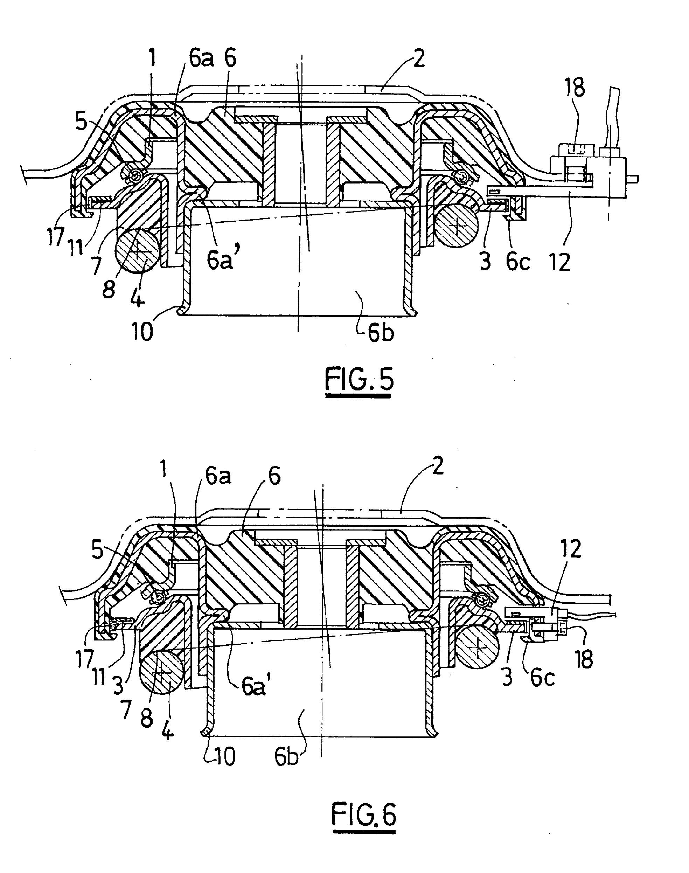

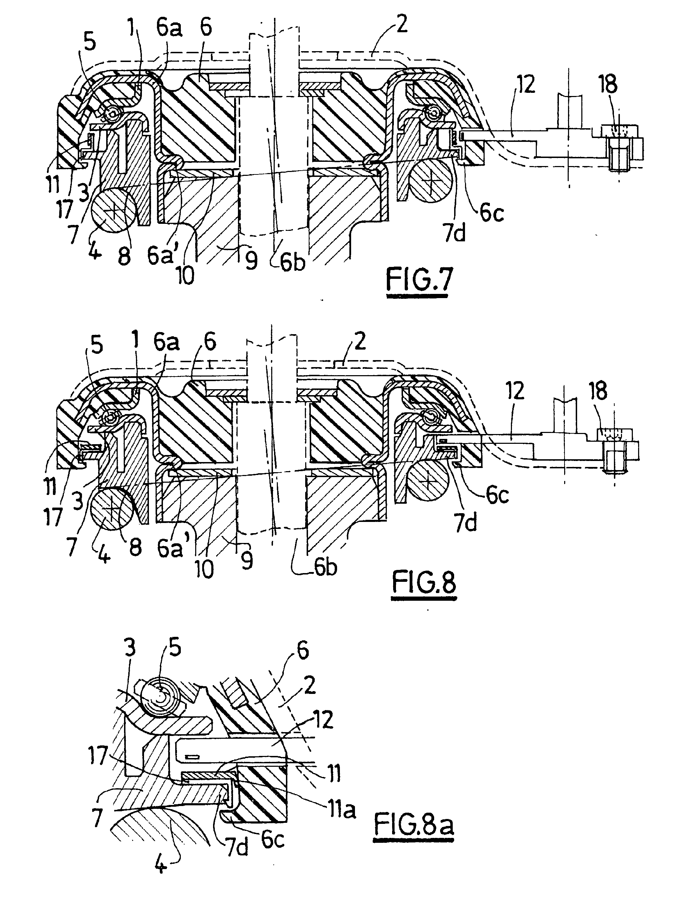

Sur les figures 5 et 6, le codeur 11 est également associé à la bague inférieure 3 de sorte à permettre une lecture axiale, ce mode de réalisation diffère de ceux des figures 3 et 4 par le fait que le codeur 11 est associé sur une face supérieure axiale de la bague inférieure 3. En outre dans le mode de réalisation des figures 5 et 6, la coupelle inférieure 7 ne comprend pas de saillies mais a une face supérieure qui est agencée pour épouser les formes de la bague inférieure 3 de sorte à assurer leur association réciproque.

Sur la figure 5, le capteur 12 est associé au châssis 2 de façon analogue à celle des figures 3 et 4. Sur la figure 6, le capteur 12 est associé sur l'insert 6a de la coupelle supérieure 6 au moyen d'une vis 18, ledit insert comprenant un logement destiné à recevoir ledit capteur de sorte à positionner les éléments sensibles en regard et à distance d'entrefer du codeur 11. Dans ce mode de réalisation, le capteur 12 est donc intégré à la butée de suspension.

Sur les figures 7 à 9, le codeur 11 est associé à la coupelle inférieure 7 respectivement suivant trois modes de réalisation, la coupelle inférieure 7 ayant une géométrie analogue à celle décrite en relation avec les figures 1 et 2 et le codeur 11 étant associé sur une extrémité extérieure 7d de ladite coupelle.

Sur les figures 7 et 8, le codeur 11 est surmoulé sur une portée cylindrique annulaire d'une armature 17 qui est associée, par exemple par clipsage, sur la face extérieure radiale de l'extrémité 7d. L'armature 17 est agencée pour permettre une lecture respectivement radiale et axiale des impulsions issues du codeur 11. En outre, le capteur 12 et son association sont analogues à ceux décrits en relation avec les figures 3 et 4, avec les éléments sensibles disposés dans ledit capteur de sorte à permettre la lecture des impulsions selon les deux réalisations.

La figure 8a représente une variante du codeur 11 représenté sur la figure 8 dans laquelle ledit codeur comprend une extension 11a destinée à venir frotter sur la face intérieure radiale de la coupelle supérieure 6 de sorte à former moyen d'étanchéité dynamique pour le dispositif de mesure. En variante, pour assurer l'étanchéité dynamique, les coupelles 6, 7 peuvent comprendre des extensions destinées à venir en contact frottant sur une partie de la butée. En outre, notamment sur cette figure, les extrémités 7d, 6c des coupelles inférieure 7 et supérieure 6 ont une géométrie agencée pour coopérer de sorte à former moyen d'étanchéité statique pour le dispositif de mesure. En effet, la pollution extérieure est ainsi empêchée de pénétrer à l'intérieur de la butée, ce qui permet notamment de protéger le codeur 11 et le capteur 12 des éventuels contaminants.

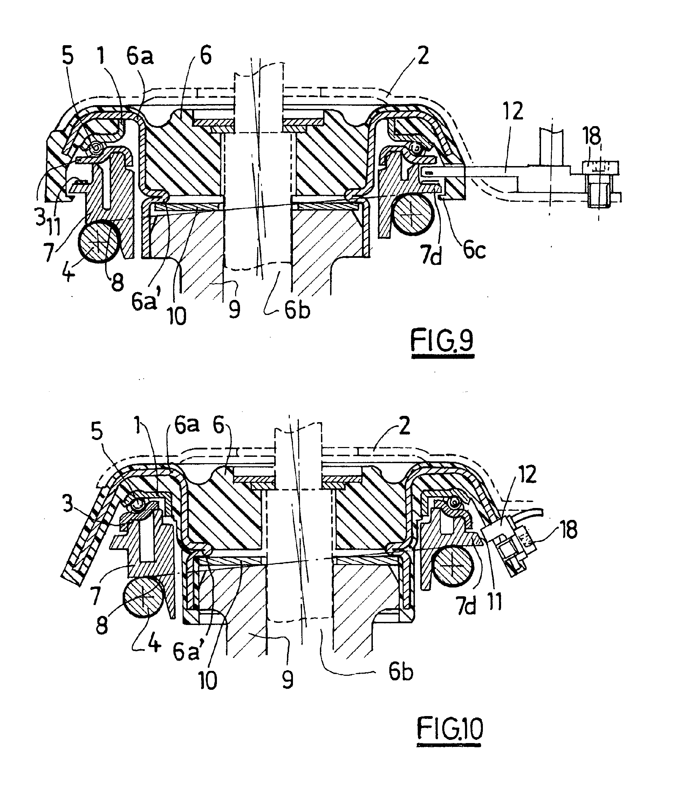

La figure 9 représente un mode de réalisation analogue à celui de la figure 8 dans lequel le codeur 11 est surmoulé ou collé directement sur la coupelle inférieure 7.

Dans le mode de réalisation représenté sur la figure 10, la coupelle inférieure 7 est de structure analogue à celle décrite en relation avec les figures 1 et 2. En outre, la coupelle inférieure 7 comprend une extrémité 7d sur la surface radiale extérieure de laquelle le codeur 11 est réalisé. A cet effet, la coupelle inférieure 7 est réalisée en polyamide 6.6 chargé de particules de ferrite ce qui en fait une pièce directement magnétisable sur laquelle il est donc possible d'imprimer la succession de pôles Nord et Sud. Par ailleurs, comme sur la figure 6, le capteur 12 est fixé sur l'insert 6a de la coupelle supérieure 6. Le capteur 12 comprend une extrémité agencée pour permettre la disposition des éléments sensibles dans un plan sensiblement parallèle au plan du codeur 11 qui est incliné.

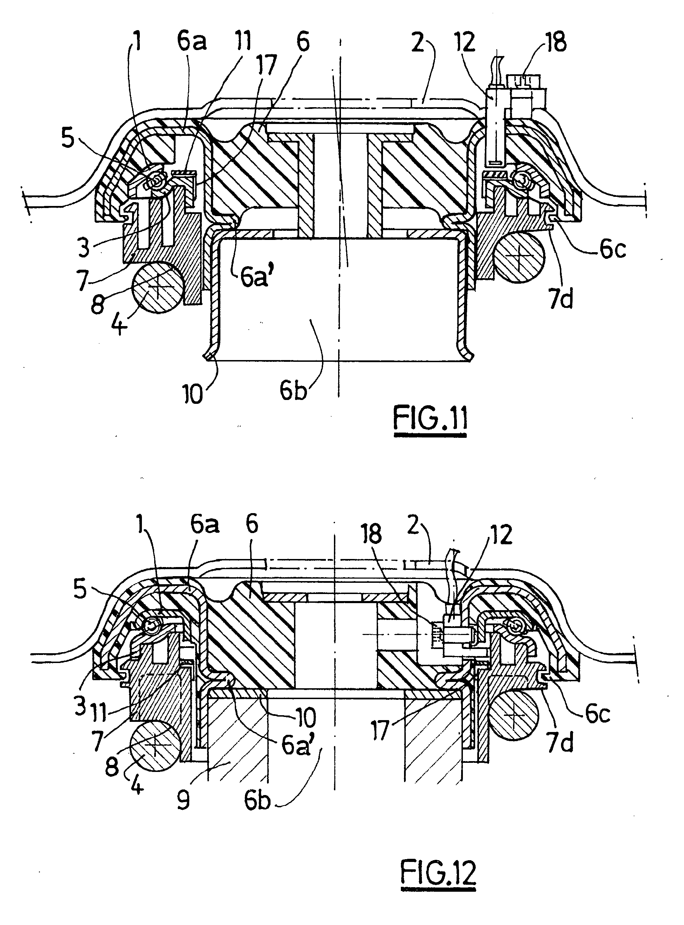

Sur les figures 11 à 14, sont représentés quatre modes de réalisation de l'association du capteur 12.

Dans les modes de réalisation des figures 11 et 12, le capteur 12 est associé sur une partie intérieure de la butée de sorte à améliorer la compacité de ladite butée.

Sur la figure 11, le capteur 12 est associé au châssis 2 et le codeur 11 est associé sur une face supérieure intérieure de la bague inférieure 3. Un logement est prévu dans le châssis 2 et dans l'insert 6a de la coupelle supérieure 6 de sorte à recevoir le capteur en positionnant les éléments sensibles en regard et à distance d'entrefer du codeur 11.

Sur la figure 12, le capteur 12 est associé à l'insert 6a de la coupelle supérieure 6 et le codeur 11 est associé sur une face supérieure intérieure de la coupelle inférieure 7, de sorte à positionner les éléments sensibles en regard et à distance d'entrefer du codeur 11.

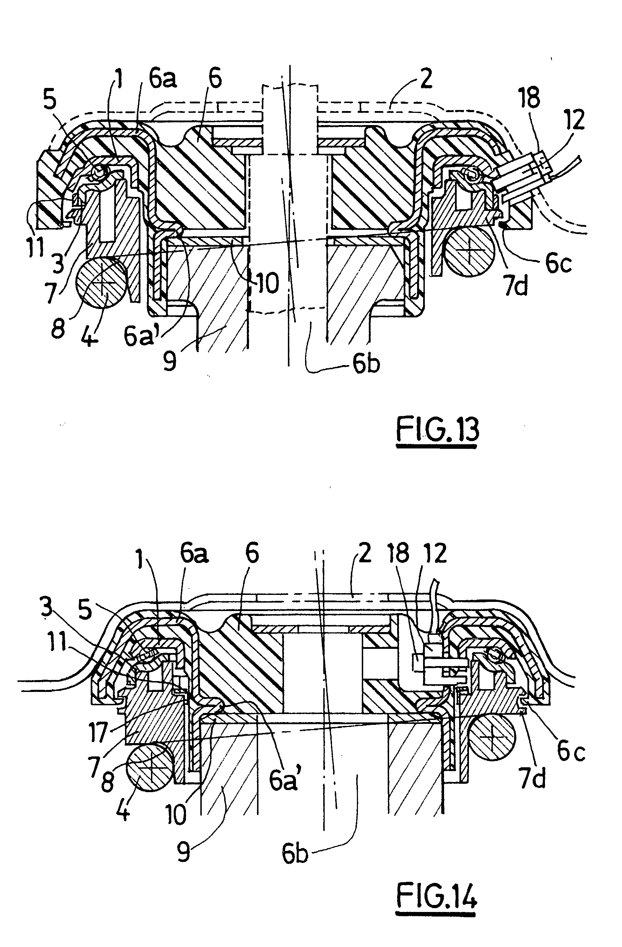

Dans les modes de réalisation des figures 13 et 14, le capteur 12 est également intégré à la butée en étant associé à la bague supérieure 1, respectivement sur une partie extérieure et sur une partie intérieure de celle-ci. Par ailleurs, ces deux figures montrent également deux modes de réalisation des extensions 6c, 7d des coupelles 6, 7 qui coopèrent de sorte à former moyen d'étanchéité statique.

## Revendications

1. Butée de suspension pour roue de véhicule automobile du type comprenant un organe fixe destiné à être solidaire du châssis (2) du véhicule et un organe tournant destiné à être solidaire du ressort (4) de suspension de sorte à être déplacée en rotation sous l'effet des efforts exercés par ledit ressort, ladite butée étant **caractérisée en ce qu'**elle comprend un dispositif de mesure des efforts verticaux appliqués à la roue du véhicule, ledit dispositif comprenant un codeur (11) générateur d'impulsions qui est solidaire de l'un des organes, un capteur (12) solidaire de l'autre organe qui est apte à détecter ces impulsions de sorte à déterminer la position angulaire de l'organe tournant par rapport à l'organe fixe, et un moyen de calcul apte, à partir de cette position, à calculer l'effort vertical appliqué correspondant.

2. Butée selon la revendication 1, **caractérisée en ce qu'**elle comprend un roulement pourvu d'une bague supérieure fixe (1) formant organe fixe, d'une bague inférieure tournante (3) formant organe tournant et de corps roulants (5) disposés entre lesdites bagues.

3. Butée selon la revendication 2, **caractérisée en ce qu'**elle comprend une coupelle supérieure (6) associée à la bague supérieure (1) et destinée à être associée au châssis (2), et une coupelle inférieure (7) associée à la bague inférieure (3) et pourvue d'un logement (8) destiné à recevoir fixement l'extrémité du ressort (4).

4. Butée selon la revendication 3, **caractérisée en ce que** le capteur (12) est associé à la coupelle supérieure (6) de sorte que les éléments sensibles du capteur (12) soient positionnés en regard et à distance d'entrefer du codeur (11 ).

5. Butée selon la revendication 2 ou 3, **caractérisée en ce que** le capteur (12) est associé à la bague supérieure (1) de sorte que les éléments sensibles du capteur (12) soient positionnés en regard et à distance d'entrefer du codeur (11 ).

6. Butée selon l'une quelconque des revendications 1 à 3, **caractérisée en ce que** le capteur (12) est associé au châssis (2) de sorte que les éléments sensibles du capteur (12) soient positionnés en regard et à distance d'entrefer du codeur (11) lorsque la butée est montée sur ledit châssis.

7. Butée selon l'une quelconque des revendications 2 à 6, **caractérisée en ce que** le codeur (11) est associé à la bague inférieure (3).

8. Butée selon l'une quelconque des revendications 3 à 6, **caractérisée en ce que** le codeur (11) est associé à la coupelle inférieure (7).

9. Butée selon l'une quelconque des revendications 3 à 6, **caractérisée en ce que** la coupelle inférieure (7) comprend une partie sur laquelle est réalisé le codeur (11).

10. Butée selon l'une quelconque des revendications 3 à 9, **caractérisée en ce que** les coupelles inférieures (7) et supérieures (6) comprennent des extensions (7d, 6c) qui coopèrent de sorte à former moyen d'étanchéité statique.

11. Butée selon l'une quelconque des revendications 3 à 10, **caractérisée en ce que** le codeur (11) et/ou les coupelles (6, 7) comprennent des extensions (11 a) qui viennent frotter sur une face de la butée de sorte à former moyen d'étanchéité dynamique.

12. Butée selon l'une quelconque des revendications 1 à 11, **caractérisée en ce que** le capteur (12) comprend des éléments sensibles choisis parmi les sondes à effet Hall, les magnétorésistances, les magnétorésistances géantes.

13. Butée selon l'une quelconque des revendications 1 à 12, **caractérisée en ce que** le codeur (11) est formé d'un anneau magnétique multipolaire en matériau synthétique chargé de particules de ferrite sur lequel est aimantée une pluralité de paires de pôles Nord et Sud équirépartis avec une largeur angulaire constante.

14. Procédé de mesure des efforts verticaux appliqués sur une roue associée au châssis (2) d'un véhicule automobile par l'intermédiaire d'une butée selon l'une quelconque des revendications 1 à 13, dans lequel, outre la position angulaire de l'organe tournant, l'angle de braquage des roues et/ou la valeur de l'enfoncement de la suspension sont utilisés par le moyen de calcul.
